# EUROPÄISCHE PATENTSCHRIFT

(11) **EP 0 303 040 B1**
(45) Veröffentlichungstag und Bekanntmachung des Hinweises auf die Patenterteilung: **01.12.1993**
(21) Anmeldenummer: 88110449.1
(22) Anmeldetag: 30.06.1988
(51) Int. Cl.: C08B 37/14

(54) **Verfahren zur Trockenkationisierung von Galaktomannanen (II)**
Process for the dry cationization of galactomannans
Procédé pour la cationisation à sec de galactomannanes

(30) Priorität: 13.08.1987 DE 3726984
(43) Veröffentlichungstag der Anmeldung: 15.02.1989
(73) Patentinhaber: Degussa Aktiengesellschaft, 60311 Frankfurt (DE)
(72) Erfinder: Stober, Reinhard, Dr., D-6457 Hasselroth 2 (DE); Fischer, Wolfgang, D-8756 Kahl (DE); Huss, Michael, D-6236 Eschborn (DE); Pieter, Reimund, Dr., D-6330 Wetzlar (DE)

(56) Entgegenhaltungen:
- EP-A- 0 234 014
- GB-A- 1 136 842
- US-A- 3 479 220

## Beschreibung

Die Erfindung betrifft ein Trockenverfahren zur Herstellung von kationischen Galaktomannanen durch Umsetzung mit Alkylenepoxiden in Gegenwart von Wasser in alkalischem Medium.

Galaktomannane sind eine wichtige Gruppe von pflanzlichen Hydrokolloiden, welche als Reservekohlehydrate, analog der Stärke, vor allem in Samenendosperm vieler Leguminosen vorkommen. Von praktisch industrieller Bedeutung sind jedoch nur das Guaran (Guar-Gummi) und das Carubin (Johannisbrotkernmehl). Guaran kommt im Endosperm der Guarbohnen (Cyamopsis tetragonoloba L.) vor, welche zur Ordnung der Leguminosen, Familie Papilionaceae, gehören. Guar ist eine alte Kulturpflanze, die heute vor allem in Indien, Pakistan und Texas in großem Maßstab angebaut wird.

Guaran enthält 64 % Mannose und 36 % Galaktose. Die in beta(1,4)-glykosidischer Bindung verknüpften Mannosebausteine bilden lange, unverzweigte Ketten, an welche einzelne Galaktosemoleküle in alpha-(1,6)-Bindungen angehängt sind. Sowohl Mannose als auch Galaktose liegen in Pyranoseform vor. Das mittlere Molekulargewicht von Guaran liegt bei 220000. Guaran ist kaltwasserlöslich.

Native und modifizierte Galaktomannane auf der Basis von Guarund Johannisbrotkernmehlen werden heute industriell auf den verschiedensten Gebieten angewendet. So. z. B. in der Erdöl-, Textil-, Papier-, Lebensmittel-, Pharma-, Kosmetik- und Sprengstoffindustrie sowie im Bergbau und in der Wasseraufbereitung. Bei der Papierherstellung sind die nativen Galaktomannane als "Wet end Additive" zur Steigerung der Papierfestigkeiten schon seit Jahren bekannt. Durch Modifizierung können die Eigenschaften der Produkte verstärkt werden, bzw. es entstehen Produkte mit völlig neuen Eigenschaften.

Um die natürliche Affinität von Galaktomannanen zur Zellulose zu verbessern und dadurch eine bessere Retention der Feinfasern erreichen zu können, gibt es die Möglichkeit der Kationisierung von Galaktomannanen.

Aus der EP-A-0146911 ist ein Verfahren bekannt, bei dem man 2,3-Epoxypropyltrimethyllammoniumchlorid in einem alkalischen wässrigen Medium bei 52 °C umsetzt.

Gemäß EP-A-0130946 führt man diese Reaktion ebenfalls in einem alkalischen Medium durch, das jedoch zusätzlich Natriumtetraborat enthält und vor dem Zusatz des Kationisierungsreagenses teilweise durch Essigsäure neutralisiert wird.

Die GB-PS 1 136 842 enthält genauere Angaben über Produkte, wie man sie bei der Umsetzung von 2,3-Epoxypropyltrimethylammoniumchlorid mit Galaktomannanen in einem alkalischen, wässrigen Medium enthält.

Gemäß diesen Druckschriften muß das kationierte Produkt vor der Weiterverwendung getrocknet, anschließend gemahlen und gesiebt werden.

Aus der älteren Anmeldung EP-A-234 014 ist ein Trockenverfahren zur Kationisierung bekannt, bei dem man die Umsetzung von Epoxid und Galaktomannan in Gegenwart von feinteiliger Kieselsäure und alkalisch wirkendem Hydoxid oder Oxid durchführt
Aufgabe der Erfindung ist ein Verfahren zur Herstellung von kationisierten Galaktomannanen, bei dem nur kurzzeitig Rührenergie aufzuwenden ist, und die kationisierten Galaktomannane ohne weitere Nachbehandlung (Absieben, Trocknen etc.) weiterverarbeitet werden können.

Verfahren zur Verätherung von Galaktomannanen durch Umsetzung mit Alkylenepoxiden der allgemeinen Formeln 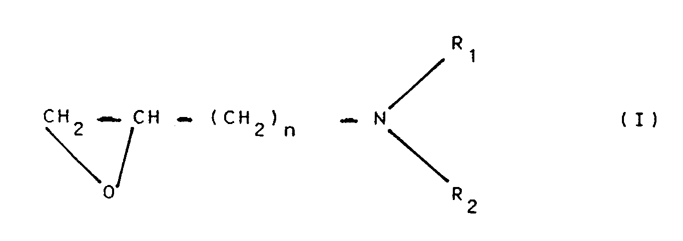
oder 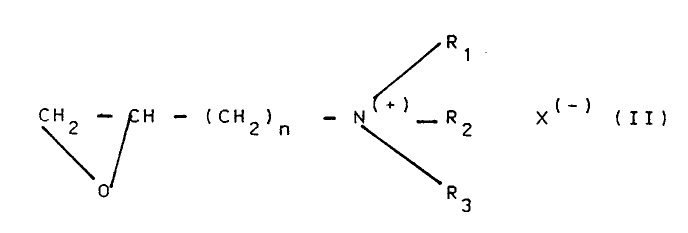
in denen n= 1 , 2 oder 3 bedeutet, R₁ , R₂ und R₃ gleiche oder verschiedene Alkylreste mit 1 bis 4 Kohlenstoffatomen oder R₁ den Benzylrest darstellen, und X⁽⁻⁾ Chlorid, Bromid, Sulfat oder Acetat entspricht, bei 5 bis 60°C in Gegenwart von alkalisch wirkenden Substanzen in einer Menge von 0,5 bis 8%, 10 bis 60 Gew.-% Wasser, und 0, 1 bis 3,0 Gew.-% einer feinteiligen Kieselsäure, deren spezifische Oberfläche zwischen 60 und 700 m² /g liegt BET-Messung nach DIN 66131, N₂-Adsorption bei der Temperatur des flüssigen Stickstoffs, vorheriges Ausheizen der Probe bei 110°C, wobei die Gew.-% bezogen sind auf Galaktomannan (atro),
dadurch gekennzeichnet, daß man die Umsetzung in Gegenwart von Alkalisilikaten und/oder -aluminaten oder eines Gemisches aus Alkali- oder Erdalkalihydroxiden bzw. -oxiden und Alkalicarbonaten oder eines Gemisches einer oder mehrerer dieser Hydoxide, Oxide oder Carbonate mit einem Alkalisilikat und/oder -aluminat durchführt, in der Weise, daß der pH-Wert des so modifizierten Galaktomannans bei ≧ 9 liegt (1 Gew.-%ige Lösung).

Der pH-Wert eines so modifizierten Galaktomannans liegt bei ≧ 9 (1 Gew.%ige Lösung).

Zur Herstellung kationischer Galaktomannane nach dem erfindungsgemäßen Verfahren können native oder modifizierte Galaktomannane oder Galaktomannane enthaltende Substanzen beliebiger Herkunft eingesetzt werden. Mit besonderem Vorteil wird natives Guarkernmehl verwendet.

Erfindungsgemäß erfolgt die Verätherung der Galaktomannane mit Alkylenepoxiden der allgemeinen Formel 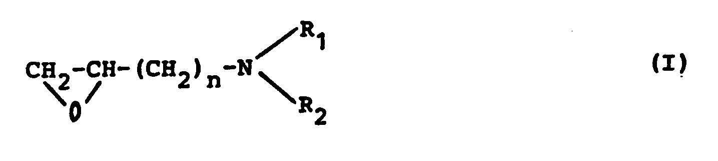
oder vorzugsweise 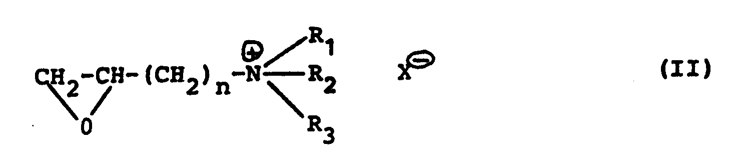
in der n eine Zahl von 1 bis 3 ist und R₁, R₂ und R₃ gleiche oder verschiedene Alkylreste mit 1 bis 4 Kohlenstoffatomen oder R₁ = Benzyl und X^{⊖} Chlorid, Bromid, Sulfat oder Acetat bedeuten. Bevorzugt ist das 2,3-Epoxypropyltrimethylammoniumchlorid.

Eine Variante des erfindungsgemäßen Verfahrens besteht darin, die Umsetzung mit den oben genannten Epoxiden in Gegenwart von 0,5 bis 5 Gew.% einer Verbindung erfolgen zu lassen, die einer der folgenden Formeln entspricht: 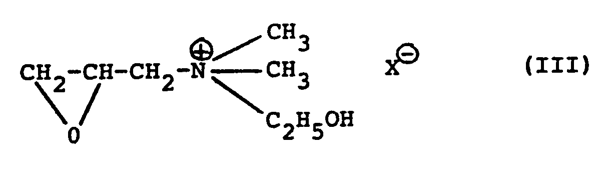
oder 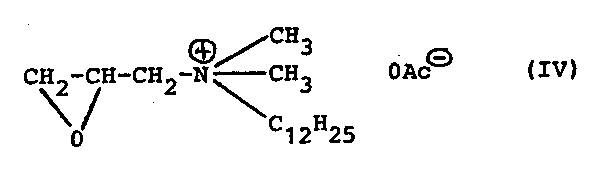
oder 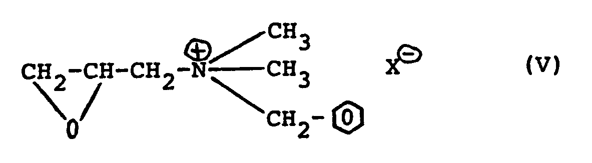
Diese Verbindungen werden vorzugsweise im Gemisch mit den Epoxiden gemäß den Formeln (I) oder (II) eingesetzt und können darin auch in Form der zugehörigen Chlorhydrine vorliegen.

Spätestens im Reaktionsmedium erfolgt dann die Umwandlung zu den Epoxiden entsprechend den Formeln (III) bis (V), die mit den Galaktomannanen reagieren. Gemische dieser Art stellt man vorteilhaft her, indem man bei der Herstellung der Epoxide mit den Formeln (I) und (II), wie z. B. in der US-PS 3 135 782 beschrieben wird, die zur Bildung der erfindungsgemäß vorgeschriebenen Anteile der Epoxide mit den Formeln (III) bis (V) notwendigen Mengen der entsprechenden tertiären Amine einsetzt.

Man kann diese Epoxide bzw. Chlorhydrine aber auch getrennt herstellen und mit den Epoxiden gemäß den Formeln (I) oder (II) im vorgeschriebenen Verhältnis vermischen.

Im allgemeinen ist es zweckmäßig, je Mol Galaktomannan, berechnet als Anhydroglukoseeinheit (Molmasse 162,15) in der Trockensubstanz, etwa 0,005 bis 0,5 Mol Epoxid vorzugsweise 0,05 bis 0,30 Mol Epoxid, anzuwenden.

Die spezifischen Oberflächen der eingesetzten, feinteiligen Kieselsäuren liegen zwischen 60 und 700 m²/g, bevorzugt 100 und 450 m²/g (BET-Messung nach DIN 66131, N₂-Adsorption bei der Temperatur des flüssigen Stickstoffs, vorheriges Ausheizen der Probe bei 110 °C).

Sie werden in einer Menge von 0,1 bis 3,0, bevorzugt von 1,0 bis 2,0 Gew.%, bezogen auf das Galaktomannan (atro), verwendet.

Bevorzugt eingesetzt werden hydrophile gefällte Kieselsäuren mit einer spezifischen Oberfläche von 190 bis 450 m²/g, insbesondere eine sprühgetrocknete gefällte Kieselsäure mit einer spezifischen Oberfläche von 190 m²/g.

Erfindungsgemäß enthält das Reaktionsgemisch die in Anspruch 1 genannten alkalisch wirkende(n) Substanz(en), insbesondere ein Alkalimetasilisilikat und/oder Alkalialuminat, in einer Menge von 0,5 bis 8,0 Gew.%, insbesondere von 1,5 bis 4,5 Gew.%, und 10 bis 60 Gew.%, bevorzugt 20 bis 30 Gew.%, Wasser, alle Werte bezogen auf die Menge des eingesetzten Galaktomannans (atro).

Verwendbar sind auch Gemische aus Alkali- oder Erdalkalihydroxiden bzw. -oxiden und Alkalicarbonaten. Geeignet sind ebenso Gemische aus einem oder mehreren dieser Oxide, Hydroxide oder Carbonate mit einem Alkalisilikat und/oder -aluminat.

Alkali bedeutet insbesondere Natrium oder Kalium, Erdalkali insbesondere Calcium.

Als Silikat wird besonders Natriummetasilikat verwendet.

In einer besonders geeigneten Ausführungsform setzt man die alkalisch wirkende(n) Substanz(en) in Form einer pulverförmigen Abmischung mit feinteiliger hydrophiler Kieselsäure (im folgenden Text "Aktivator" genannt) ein.

Der Aktivator besteht aus 10 bis 50 Gew.% Kieselsäure und 90 bis 50 Gew.% dieser Substanzen.

Erfindungsgemäß geht man dabei so vor, daß man das Gemisch aus Galaktomannan, alkalisch wirkender Substanz(en), Kieselsäure und Alkylenepoxid, das im allgemeinen als wässrige Lösung eingesetzt wird, in einem Intensivmischer homogenisiert.

Die Epoxidlösung wird zweckmäßigerweise fein verteilt, dem in handelsüblicher Form mit einem Wassergehalt von ca. 7 bis 15 Gew.% vorliegenden Galaktomannan zugesetzt, vorzugsweise aufgesprüht.

Das alkalisch wirkende(n) Substanz(en) und die Kieselsäure können dem Galaktomannan vorher oder nachher zugesetzt werden.

Der pulverförmige Aktivator wird bevorzugt vor dem Zusatz der Epoxidlösung mit dem Galaktomannan vermischt. Man kann Epoxidlösung und alkalische Komponente auch gleichzeitig in das Mischaggregat eintragen.

Das bei der Herstellung des Epoxids durch Umsetzung des entsprechenden Halogenhydrins mit alkalisch wirkenden Substanzen, wie z. B. Alkalihydroxid, anfallende Gemisch kann unmittelbar verwendet werden, wenn das dabei entstehende Alkalihalogenid im Endprodukt nicht stört (Korrosionsgefahr).Dieses wird weder gewaschen noch neutralisiert und kann direkt eingesetzt werden.

Die Kationisierungsreaktion kann sowohl im Mischaggregat oder auch nach der Homogenisierung außerhalb in einem Lagersilo oder in den entsprechenden für den Versand vorgesehenen Verpackungen erfolgen.

Soll die Reaktion im Mischaggregat ablaufen, werden bei 30 bis 60 °C Ausbeuten von 40 - 60 % nach 6 bis 24 Stunden erzielt.

In der bevorzugten Ausführungsform geht man jedoch so vor, daß man das Reaktionsgemisch bei 5 bis 40 °C in dem Intensivmischer innerhalt von 10 Sekunden bis 25 Minuten homogenisiert, dann ausschleust und in dem vorgesehenen Lagerbehälter wie z. B. einem Silo, die Kationisierungsreaktion bei denselben Temperaturen bis zum Ende ablaufen läßt.

Es erweist sich in diesem Falle als vorteilhaft, daß man bevorzugt in dem Temperaturbereich arbeitet, in dem sich in Abhängigkeit von z. B. jahreszeitlich bedingten Schwankungen der Umgebungstemperatur die Raumtemperatur von anspruchslosen Warenlagern bewegt, d. h. von 18 bis 30 °C, insbesondere 20 bis 25 °C.

Die nach dem erfindungsgemäßen Verfahren hergestellten kationischen Galaktomannane liegen im allgemeinen als feine trockene Pulver vor und können nach der Reaktion direkt eingesetzt werden.

Als Intensivmischer besonders geeignet sind z. B. Pflugscharmischer mit 1 oder mehreren Messerköpfen für diskontinuierliche und kontinuierliche Fahrweise oder Befeuchtungsdurchflußmischer speziell für den kontinuierlichen Betrieb.

Erfindungsgemäß sind also zusätzliche Reaktionsbehälter überflüssig, da das Reaktionsgemisch nach der intensiven Durchmischung in die für den Versand vorgesehenen Verpackungen oder in ein Lagersilo abgefüllt werden kann und dort abreagiert.

Die geringe Verweilzeit im Mischaggregat ermöglicht gleichzeitig die kontinuierliche Durchführung der Trockenkationisierung, während nach dem Stand der Technik, aufgrund der langen Mischzeiten, nur die absatzweise Kationisierung bekannt und sinnvoll war.

Die erfindungsgemäß hergestellten kationischen Galaktomannane eigen sich neben der Anwendung in der Erdöl-, Textil-, Pharma-, Kosmetik- und Sprengstoffindustrie auch als Einsatzstoff im Bergbau und bei der Wasseraufbereitung.

Als besonders vorteilhaft erweist sich der Einsatz kationischer Galaktomannane (hauptsächlich Guar) in der Papierindustrie. Hierbei werden Berstdruck, Reißlänge, Lagenfestigkeit, Retention, Blattformation und die Verteilung der Fasern bei der Papierherstellung positiv beeinflußt.

Im Gegensatz zu nativem Guar ist kationischer Guar besser dispergierbar und neigt weniger zu Entwässerungsschwierigkeiten auf dem Sieb. Auch läßt sich der Stoff, während der Papierherstellung, bei einem Zusatz von kationischem Guar leichter mahlen. Kationischer Guar ist auch als Entwässerungshilfsmittel und Trocknungsbeschleuniger geeignet.

Folgende Aktivator-Typen wurden für die Kationisierung von Guar (Guaran) verwendet.

**Tabelle 1**

| Aktivatorgemische | |
|---|---|
| Type | Zusammensetzung (Gew.%) |
| PC-# 01 | 69,45 % Natriummetasilikat |
| | 30,55 % KS (sprühgetrocknete Kieselsäure; 190 m²/g) |
| PC-# 02 | 40,30 % Natriummetasilikat |
| | 24,25 % Calciumhydroxid |
| | 35,45 % KS |
| PC-# 03 | 72,12 % Natriumaluminat |
| | 27,88 % KS |
| PC-# 04 | 33,14 % Natriummetasilikat |
| | 37,70 % Natriumaluminat |
| | 29,16 % KS |
| PC-# 05 | 43,44 % Natriumaluminat |
| | 22,97 % Calciumhydroxid |
| | 33,59 % KS |

Als Kieselsäure wurde in allen Beispielen eine sprühgetrocknete, hydrophile Kieselsäure mit 190 m²/g spez. Oberfläche (BET) benutzt.

### Beispiele

Es wurden jeweils 1000 g (5.551 Mol) natives Guarmehl (Feuchtegehalt 10,0 %, Gehalt an unlöslichem Stickstoff 0,477 %) 5 min. lang intensiv mit dem angegebenen Aktivator vermischt (Pflugscharmischer) und die Reagenzlösung, welche jeweils 210,42 g (entsprechend einem theoretischen DS von 0.250) 2,3-Epoxypropyltrimethylammoniumchlorid enthielt, bei laufendem Mischer innerhalb von 3 min. aufgesprüht. Nach weiteren 15 min. Mischdauer wurde das Reaktionsgut in Polyethylensäcke verpackt und nach 4 Tagen Lagerzeit analysiert. Abmischung und Lagerung erfolgten bei Raumtemperatur (20 °C). Die Ausbeute bzw. der Substitutionsgrad (DS) wurden durch Stickstoffbestimmung nach Kjeldahl am ausgewaschenen Produkt bestimmt.
Waschlösung: iso-Propanol / Wasser (60:40 Gew.%).

**Tabelle 2**

| Aktivator | | | Reagenzlösung | | |
|---|---|---|---|---|---|
| Nr. | Typ | Menge | Menge | prakt. DS | Ausbeute |
| 1 | PC-# 01 | 46,89 g | 472,66 g | 0,1188 | 47,5 % |
| 2 | PC-# 02 | 40,77 g | 472,85 g | 0,0710 | 28,4 % |
| 3 | PC-# 04 | 51,12 g | 471,91 g | 0,1064 | 42,6 % |
| 4 | PC-# 05 | 48,96 g | 473,25 g | 0,1110 | 44,4 % |
| 5 | PC-# 06 | 42,93 g | 471,52 g | 0,0785 | 31,4 % |

Die Zusammensetzung des eingesetzten Metasilikats lautet:
48 ± 1 % SiO₂, 51,0 ± 1 % Na₂O,
die des Aluminats:
52 - 55 % Al₂O₃, 37 - 39 % Na₂O

## Patentansprüche

1. Verfahren zur Verätherung von Galaktomannanen durch Umsetzung mit Alkylenepoxiden der allgemeinen Formeln 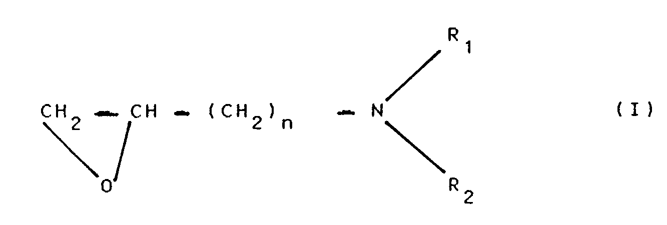 oder 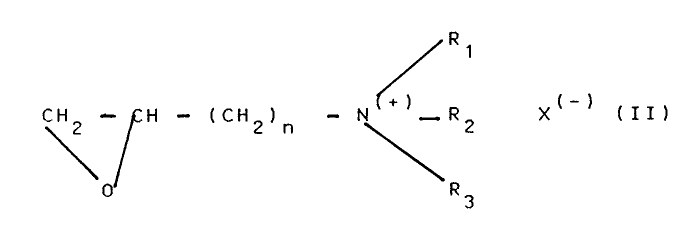 in denen n= 1, 2 oder 3 bedeutet, R₁, R₂ und R₃ gleiche oder verschiedene Alkylreste mit 1 bis 4 Kohlenstoffatomen oder R₁ den Benzylrest darstellen, und X⁽⁻⁾ Chlorid, Bromid, Sulfat oder Acetat entspricht, bei 5 bis 60°C in Gegenwart von alkalisch wirkenden Substanzen in einer Menge von 0,5 bis 8%, 10 bis 60 Gew.-% Wasser, und 0, 1 bis 3,0 Gew.-% einer feinteiligen Kieselsäure, deren spezifische Oberfläche zwischen 60 und 700 m²/g BET-Messung nach DIN 66131, N₂-Adsorption bei der Temperatur des flüssigen Stickstoffs, vorheriges Ausheizen der Probe bei 110°C, wobei die Gew.-% bezogen sind auf Galaktomannan (atro),
dadurch gekennzeichnet, daß man die Umsetzung in Gegenwart von Alkalisilikaten und/oder -aluminaten oder eines Gemisches aus Alkali- oder Erdalkalihydroxiden bzw. -oxiden und Alkalicarbonaten oder eines Gemisches einer oder mehrerer dieser Hydoxide, Oxide oder Carbonate mit einem Alkalisilikat und/oder -aluminat durchführt, in der Weise, daß der pH-Wert des so modifizierten Galaktomannans bei ≧ 9 liegt (1 Gew.-%ige Lösung).

2. Verfahren gemäß Anspruch 1,
dadurch gekennzeichnet, daß man das Galaktomannan enthaltende Reaktionsgemisch in einem Intensivmischer innerhalb von 10 Sekunden bis 25 Minuten homogenisiert, dann ausschleust und in dem vorgesehenen Lagerbehältnis ausreagieren läßt.

3. Verfahren gemäß den Ansprüche 1 und 2,
dadurch gekennzeichnet, daß man die Kationisierung in Gegenwart von 0,5 bis 5 Gew.-% einer Verbindung. bezogen auf die Epoxide mit den Formeln I und II, umsetzt, die den folgenden Formeln entspricht: 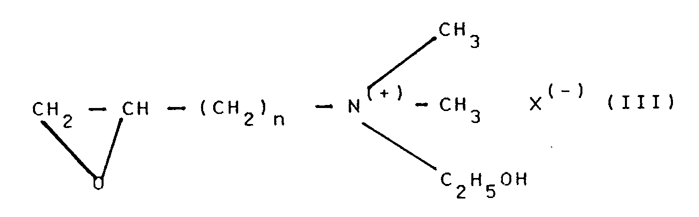 oder 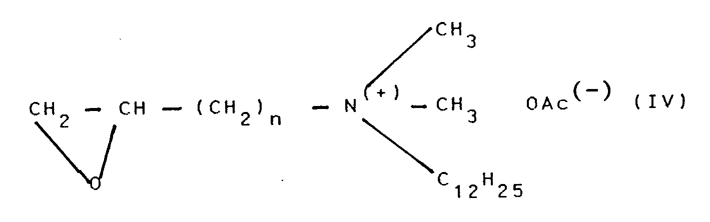 oder 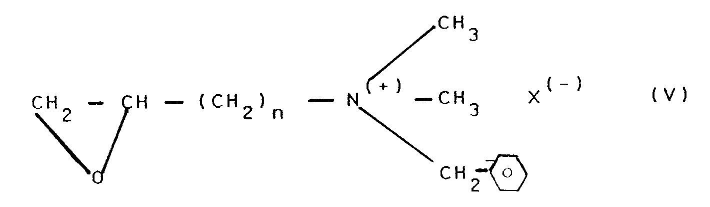 mit X⁽⁻⁾ : Chlorid, Bromid, Sulfat oder Acetat (OAc).

4. Verfahren gemäß den Ansprüchen 1 bis 3,
dadurch gekennzeichnet, daß man ein pulverförmiges Gemisch aus den alkalisch wirkenden Substanzen und einer feinteiligen hydrophilen Kieselsäure einsetzt.

## Claims

1. Process for etherification of galactomannans by reaction with alkylene epoxides of the general formula 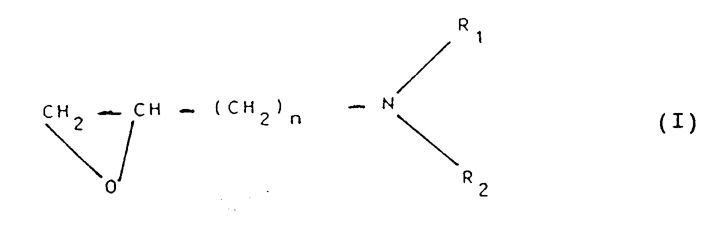 or 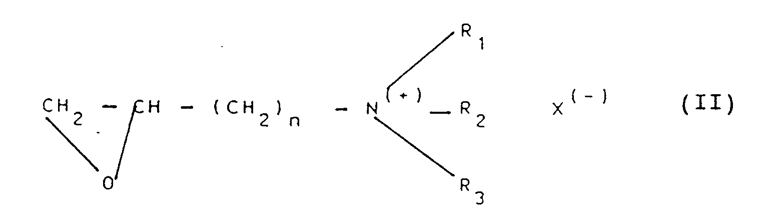 in which n denotes 1, 2 or 3, R₁, R₂ and R₃ represent identical or different alkyl radicals having 1 to 4 carbon atoms or R₁ represents the benzyl radical, and X⁽⁻⁾ corresponds to chloride, bromide, sulphate or acetate, at 5 to 60°C in the presence of alkaline substances in an amount from 0.5 to 8 %, 10 to 60 % by weight of water, and 0.1 to 3.0 % by weight of a finely divided silica whose specific surface area is between 60 and 700 m²/g (BET measurement according to DIN 66131, N₂ adsorption at the temperature of liquid nitrogen, previous heating of the sample to 110°C), the % by weight being based on galactomannan (absolutely dry),
characterised in that the reaction is carried out in the presence of alkali metal silicates and/or aluminates or of a mixture consisting of alkali metal or alkaline earth metal hydroxides or oxides and alkali metal carbonates or of a mixture of one or more of these hydroxides, oxides or carbonates with an alkali metal silicate and/or aluminate, in such a way that the pH of the galactomannan thus modified is ≧ 9 (1 % strength by weight solution).

2. Process according to Claim 1, characterised in that the galactomannan-containing reaction mixture is homogenised in an intensive mixer over a period of 10 seconds to 25 minutes and then discharged and the reaction is allowed to go to completion in the intended storage container.

3. Process according to Claims 1 and 2, characterised in that the cationisation is carried out in the presence of 0.5 to 5 % by weight of a compound, based on the epoxides having the formulae I and II, which corresponds to the following formula: 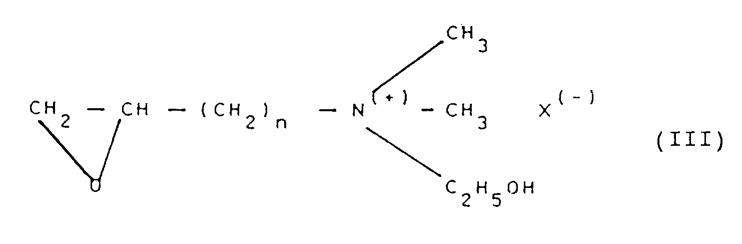 or 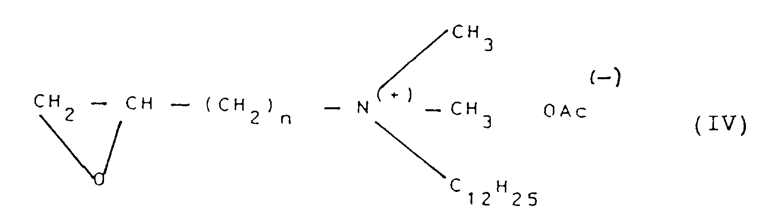 or 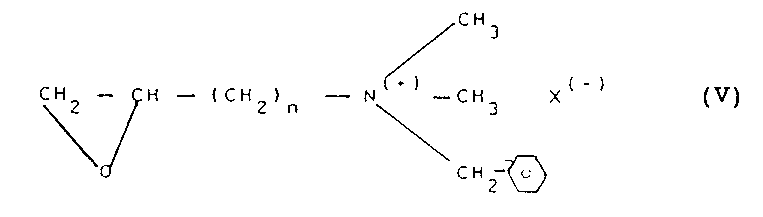 with X⁽⁻⁾ = chloride, bromide, sulphate or acetate (OAc).

4. Process according to Claims 1 to 3, characterised in that a powdered mixture of the alkaline substances and a finely divided hydrophilic silica is employed.

## Revendications

1. Procédé d'éthérification de galactomannanes par réaction avec des alkylèneépoxydes de formules générales : 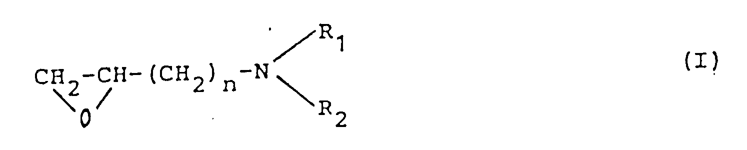 ou 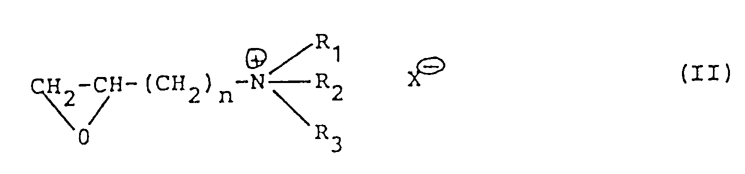 dans lequelles n = 1, 2 ou 3, R₁, R₂ et R₃ représentent des radicaux alkyle égaux ou différents avec de 1 à 4 atomes de carbone ou R₁ le radical benzyle et X⁽⁻⁾ correspond à un chlorure, bromure, sulfate ou acétate, à une température entre 5 et 60°C en présence de subtances à action alcaline en une quantité de 0,5 à 8 %, de 10 à 60 % en poids d'eau et de 0,1 à 3,0 % en poids d'un acide silicique finement divisé, dont la surface spécifique se situe entre 60 et 700 m²/g, mesure BET selon DIN 66 121, adsorption de N₂ à la température de l'azote liquide et chauffage préalable de l'échantillon à 110°C, les % en poids étant rapportés à la galactomananne (à l'état complément sec),
caractérisé :
- en ce qu'on réalise la réaction en présence de silicates et/ou d'aluminates alcalins ou d'un mélange d'hydroxydes ou d'oxydes alcalins ou alcalino-terreux et de carbonates alcalins ou d'un mélange d'un ou plusieurs de ces hydroxydes, oxydes ou carbonates avec un silicate et/ou un aluminate alcalin, de manière que le pH de la galactomannane ainsi modifié soit ≧ 9 (solution à 1 % en poids).

2. Procédé selon la revendication 1, caractérisé :
- en ce qu'on homogénéise le mélange réactionnel contenant la galactomannane dans un mélangeur poussé pendant 10 secondes à 25 minutes, ensuite on vide et on fait réagir dans le récipient de stockage prévu.

3. Procédé selon les revendications 1 et 2, caractérisé,
- en ce que la cationisation a lieu en présence de 0,5 à 5 % en poids d'un composé, rapporté aux époxydes de formule (I) et (II), qui correspond aux formules suivantes : 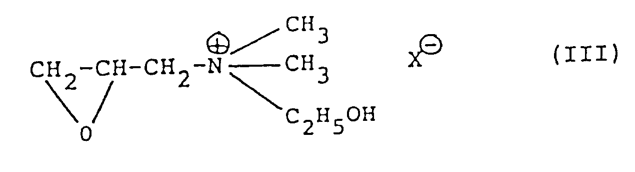 ou 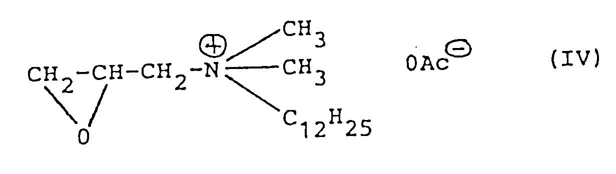 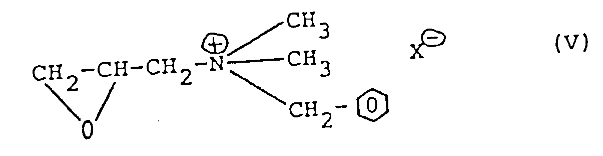 avec X⁽⁻⁾, chlorure, bromure, sulfate ou acétate (OAc).

4. Procédé selon les revendications 1 à 3, caractérisé :
- en ce qu'on met en jeu un mélange pulvérulent de substances à action alcaline et d'un acide silicique hydrophile finement divisé.
